# EUROPÄISCHE PATENTSCHRIFT

(11) **EP 2 549 021 B1**
(45) Veröffentlichungstag und Bekanntmachung des Hinweises auf die Patenterteilung: **11.09.2013**
(21) Anmeldenummer: 11005872.4
(22) Anmeldetag: 18.07.2011
(51) Int. Cl.: E02B 9/00, E02D 29/12, F16L 21/02, F16L 55/16, E03F 5/02, E02D 5/18

(54) **Pumpspeicherkraftwerk und Verfahren zu seiner Herstellung**
Pump storage power plant and method for its production
Centrale d'accumulation par pompage et son procédé de fabrication

(43) Veröffentlichungstag der Anmeldung: 23.01.2013
(73) Patentinhaber: Bauer Spezialtiefbau GmbH, 86529 Schrobenhausen (DE)
(72) Erfinder:
(74) Vertreter: Wunderlich, Rainer

(56) Entgegenhaltungen:
- EP-A1- 0 440 584
- EP-A2- 1 788 157
- DE-A1- 1 484 534
- DE-A1- 3 534 655
- DE-A1-102010 060 425
- DE-B- 1 239 993
- DE-U1-202011 000 798
- GB-A- 2 349 398
- JP-A- 2002 081 087
- US-A1- 2005 034 452

## Beschreibung

Die Erfindung betrifft ein Pumpspeicherkraftwerk mit zumindest einem oberen Wasserspeicher und zumindest einem unteren Wasserspeicher und mindestens einer dazwischen angeordneten Pump- und Kraftwerkeinheit gemäß dem Oberbegriff des Anspruchs 1. Die Erfindung betrifft des Weiteren ein Verfahren zum Herstellen eines solchen Pumpspeicherkraftwerkes nach Anspruch 10.

Pumpspeicherkraftwerke sind seit vielen Jahrzehnten bekannt und dienen dem Ausgleich von Angebots- und Bedarfsschwankungen bei der Stromerzeugung. In Zeiten niedriger Stromnachfrage oder eines hohen Stromangebotes wird in einem Pumpspeicherkraftwerk Wasser unter Verbrauch elektrischer Energie in einen höher gelegenen oberen Wasserspeicher gepumpt. Bei Strombedarfsspitzen kann das Wasser aus dem oberen Wasserspeicher entsprechend dem Prinzip eines Wasserkraftwerkes über eine Turbine in den unteren Wasserspeicher abgelassen werden, wobei Stromenergie zur Überlastdeckung erzeugt wird.

Im Hinblick auf den zunehmenden Anteil der Stromerzeugung durch Windkraft- und Solaranlagen mit zeitlich stark schwankender Energieerzeugung steigt grundsätzlich der Bedarf von Pumpspeicherkraftwerken zum Kapazitätsausgleich.

Funktionsbedingt sind Pumpspeicherkraftwerke in Bergregionen angeordnet, wobei teilweise natürliche Gewässer als Wasserspeicher benutzt werden. Die Nutzung natürlicher Gewässer zu Speicherzwecken stößt jedoch aufgrund des stark schwankenden Wasserpegels auf Umweltbedenken. Auch die Anordnung künstlicher Speicherseen stellt einen nicht unerheblichen Eingriff in die Landschaft mit einem entsprechenden Landschaftsverbrauch dar. Zumal sind Standorte mit geeigneten natürlichen Bedingungen zum Anlegen von Speicherseen begrenzt.

Aus der DE 10 2009 005 360 A1 geht ein Pumpspeicherkraftwerk hervor, bei welchem ein Oberbecken und ein Unterbecken von einem ringförmigen Wall umgeben sind. Eine derartige oberirdische Anlage benötigt eine entsprechend große Grundfläche. Ein gattungsgemäßes Pumpspeicherkraftwerk geht aus der US 2005/034452 A1 hervor; dieses Dokument entspricht dem Oberbegriff des Anspruches 1 und 10, und wird als nächstkommender Stand der Technik angesehen.

Aus der DE 20 2007 016 897 U1, der DE 10 2007 056 772 A1 oder der DE 10 2008 020 987 A1 sind Pumpspeicherkraftwerke bekannt, bei welchen zumindest einer der Wasserspeicher in einer unterirdischen Kaverne vorgesehen ist. Als Kavernen werden in den beiden letztgenannten Druckschriften ausgesolte Salzkavernen oder Lagerstätten für Erdöl/Erdgas angeführt. Dabei ergibt sich ebenfalls eine erhebliche Standorteinschränkung.

In der DE 100 28 431 A1 wird gelehrt, dass gesamte Kraftwerk mit den Wasserspeichern als ein unterirdisches Bauwerk auszubilden. Unterirdische Bauwerke sind jedoch kostenaufwendig.

Aus der JP 2002 081087 A ist ein Kanalschachtelement bekannt, welches zum leichteren Transport und besseren Handhabung aus ringsegmentartigen Teilstücken zusammengeschraubt ist.

Zur Absicherung einer Baugrube gegen Grundwassereinbruch offenbart die DE 35 34 655 A1 ein Verfahren zum Erstellen einer Schlitzwand, welche mittels Erdankern im rückwärtigen Boden fixiert wird. Aus der EP 1 788 157 A2 oder der GB 2 349 398 A gehen weitere Verfahren zum Herstellen linearer Schlitzwände hervor.

Bei der unterirdischen Anordnung von Bauwerken zur Wasserspeicherung ist zudem zu berücksichtigen, dass diese Bauwerke erheblichen Belastungen ausgesetzt sind. Bei leerem Speicher muss dieser dem erheblichen umgebenden Bodendruck standhalten. Bei Füllung steigt der Innendruck und es können sich die Druckverhältnisse umkehren, so dass insbesondere bei stark schwankenden Speicherfüllungen eine erhebliche Schwellbelastung des Bauwerkes entsteht. Das Bauwerk muss entsprechend massiv und damit kostenaufwendig erstellt werden. Aufgrund der Schwellbelastung besteht die Gefahr von Rissen und Leckagen selbst in massiven Baukörpern. Gerade bei großen Speichervolumen, wie sie für Pumpspeicherkraftwerke notwendig sind, stellt sich die Frage der Rentabilität für derartige unterirdische Speicher.

Der Erfindung liegt die **Aufgabe** zugrunde, ein Pumpspeicherkraftwerk und ein Verfahren zu seiner Herstellung anzugeben, welche den auftretenden Schwellbelastungen bei schwankenden Speicherfüllungen besonders gut Rechnung tragen.

Nach der Erfindung wird die Aufgabe zum einen durch ein Pumpspeicherkraftwerk mit den Merkmalen des Patentanspruchs 1 gelöst. Hinsichtlich des Verfahrens wird die Aufgabe nach der Erfindung durch das Verfahren nach dem Patentanspruch 10 gelöst. Bevorzugte Ausführungsformen der Erfindung sind in den jeweils abhängigen Ansprüchen angegeben.

Das erfindungsgemäße Pumpspeicherkraftwerk ist dadurch gekennzeichnet, dass zumindest einer der Wasserspeicher im Boden als ein vertikaler zylindrischer Schacht ausgebildet ist, dessen Schachtwand aus vertikalen, ringförmig nebeneinander angrenzenden Wandelementen aufgebaut ist, zwischen denen Dichtungselemente angeordnet sind.

Ein erster Aspekt der Erfindung besteht darin, zumindest einen der Wasserspeicher im Boden als einen vertikalen zylindrischen Schacht auszubilden. Der Schacht kann dabei eine beliebige Tiefe, vorzugsweise zwischen 50 Metern bis 100 Metern, aufweisen. Damit können sehr große Wassermengen bei einem begrenzten Schachtdurchmesser, welcher bis zu 100 Metern oder mehr betragen kann, erreicht werden. Vorzugsweise beträgt das Verhältnis zwischen Tiefe und Durchmesser des Schachtes 2 zu 1 und höher. Ein derartiger Schacht könnte an seiner Oberseite geschlossen werden, so dass der Wasserspeicher kaum landschaftsstörend ist. Ein Deckbereich des Schachtes kann ohne weiteres landschaftsverträglich gestaltet, insbesondere bepflanzt oder bebaut werden.

Auf diese Weise wird der Landschaftsverbrauch bei einem Pumpspeicherkraftwerk ganz erheblich reduziert.

Ein weiterer Aspekt der Erfindung liegt darin, die Schachtwand aus vertikalen, ringförmig nebeneinander angeordneten Wandelementen aufzubauen. Die vertikalen Wandelemente haben eine Länge, welche etwa der Tiefe des Schachtes entspricht. Anstelle für Schächte üblicher Ringsegmente oder einer durchgehenden Betonierung einer Schachtwand erlaubt der Aufbau aus länglichen nebeneinander angrenzenden Wandelementen eine gute Standfestigkeit bei Schwellbelastung bei einem effizienten Materialeinsatz. Durch die zylindrische Anordnung der daubenartigen Wandelemente können diese sehr gut einem umgebenden Bodendruck durch gegenseitige Abstützung standhalten. An Kontaktflächen der angrenzenden Wandelemente kann eine Übertragung der Druckkräfte erfolgen, so dass der umgebende Bodendruck kompensiert wird. Dies ist wichtig, wenn der Wasserspeicher betriebsbedingt leer oder weitgehend geleert ist. Andererseits können die so angeordneten Wandelemente bei einem steigenden Innendruck beim Füllen des Wasserspeichers in gewissem Umfang in radialer Richtung ihre Lage dem druckbelasteten Boden anpassen, so dass auch bei einer relativ geringen Dicke der Schachtwand bei relativ hohen Innendrücken eine gute Dauerstabilität sichergestellt ist. Eine ausreichende Dichtigkeit wird durch Dichtungselemente erreicht, welche zwischen den Wandelementen angeordnet sind.

Eine besonders gute Verteilung und Kompensation der durch den umgebenden Boden ausgeübten Druckkräfte wird erfindungsgemäß dadurch erreicht, dass die vertikalen Wandelemente einen rechteckigen, trapezförmigen oder bogenförmigen Querschnitt aufweisen und zumindest in ihrem radial innenliegenden Seitenbereich aneinander liegen. Durch den aneinanderliegenden Kontaktbereich, welcher sich über die gesamte vertikale Länge erstreckt, wird eine Kontaktfläche gebildet, durch welche die von außen anstehenden Druckkräfte innerhalb der kreiszylindrischen Schachtwand weitergeleitet und gegenseitig aufgehoben werden. Die Querschnitte der vertikalen Wandelemente bilden Kreisringsegmente, welche zusammen einen im Wesentlichen kreisförmigen Ring ergeben.

Weiter ist es nach der Erfindung besonders vorteilhaft, dass die vertikalen Wandelemente als Schlitzwandlamellen ausgebildet sind, welche mittels Schlitzwandfräsen oder Schlitzwandgreifern hergestellt sind. Zum Bilden der Schachtwand werden einzelne Stiche oder Schlitze unter Verwendung einer Bentonit-Stützflüssigkeit in den Boden niedergebracht, welche mit einer abbindenden Masse, insbesondere Beton, verfüllt werden. Noch vor Einbringen des Betons kann entlang den Schmalseiten der Lamellen ein Dichtungselement entlang der vertikalen Länge des Schlitzwandelementes angebracht werden. Die einzelnen Schlitzwandlamellen können so mit Abstand zueinander getrennt ausgebildet werden. Nach Aushärten der ersten zueinander beabstandeten Schlitzwandlamellen kann dann zum Schließen der zylindrischen Schachtwand in dem jeweiligen Zwischenraum zwischen zwei ersten Schlitzwandlamellen ein zweiter Schlitz eingebracht werden. In diesem Schlitz kann dann die dazwischen liegende Schlitzwandlamelle durch Ausfüllen und Aushärten einer Betonmasse ausgebildet werden. Diese Schlitzwandlamelle grenzt an die beiden bestehenden seitlichen Schlitzwandlamellen an, so dass durch entsprechende Wiederholung eine geschlossene Schachtwand gebildet wird. Auf diese Weise kann die Schachtwand erstellt werden, ohne dass aufwendige Abstützmaßnahmen während des Erstellens benötigt werden.

Grundsätzlich können die einzelnen vertikalen Wandelemente in ihren angrenzenden Bereichen miteinander verbunden sein. Zur Sicherung einer ausreichenden Dichtigkeit der Schachtwand auch bei längerem Betrieb mit Schwellbelastung ist es erfindungsgemäß vorgesehen, dass die Dichtungselemente als vertikale elastische Dichtungsbänder ausgeführt sind, welche zu beiden Seiten mit den angrenzenden vertikalen Wandelementen fest verbunden sind. Die Dichtungsbänder können dabei als Gummimatten ausgebildet sein, welche sich im Wesentlichen in Umfangsrichtung zwischen zwei angrenzenden Wandelementen erstrecken. Bevorzugterweise haben diese Gummiplatten an den Seiten Wulste, welche eine zugfeste Verankerung im Beton erreichen.

Besonders bevorzugt ist es nach der Erfindung, dass die Dichtungselemente als vertikale elastische Fugenbänder mit seitlich angeformten metallischen Abschlusselementen ausgebildet sind, welche mit den vertikalen Wandelementen verbunden sind. Dabei sind die Ränder der elastischen Fugenbänder, welche sich ebenfalls über die vertikale Länge der Wandelemente erstrecken, in klammerartigen metallischen Abschlusselementen befestigt. Diese Abschlusselemente weisen außenliegende Flanschbereiche auf, welche fest mit den Seiten der jeweils angrenzenden Wandelemente verbunden sind.

Der Einbau der Fugenbänder kann durch verschiedene Techniken erfolgen. So können die Fugenbänder in koppelbaren Fertigteilen aus Stahl oder Stahlbeton eingebaut sein oder in temporär eingestellten Stahlkonstruktionen, wie Abschalbohlen, die nach dem Betonieren einer Schlitzwandlamelle wieder ausgebaut werden, wobei das Fugenband einseitig im Betonelement einbetoniert in der Randfuge der Schlitzwandlamelle zurückbleibt. Die Verankerung im Beton erfolgt dabei anhand von Wulsten oder Verdickungen an den seitlichen Begrenzungen des elastischen Fugenbandes. Auch über Stahlbleche, die an den Rändern des Fugenbandes anvulkanisiert sind, wird eine gute Verankerung im Beton erreicht.

Weiter ist es nach der Erfindung bevorzugt, dass die Schachtwand eine gewisse radiale Verformbarkeit oder Flexibilität oder Elastizität aufweist. Dabei ist vorgesehen, dass eine Lage der vertikalen Wandelemente zwischen einer radial innenliegenden Position und einer radial außenliegenden Position veränderbar ist. Diese Veränderungen können in Millimeter- oder im Zentimeterbereich liegen. Dabei auftretende Fugen zwischen den einzelnen Wandelementen können durch die Dichtungselemente kompensiert und abgedichtet werden. Grundsätzlich ist es möglich, dass die vertikalen Wandelemente zum Bilden eines nach unten geschlossenen Schachtes bis zu einer wassersperrenden Schicht erstellt werden. Diese wassersperrende Schicht kann dabei den unteren Boden des Wasserbeckens bilden, welcher von der seitlichen Schachtwand umschlossen wird.

Eine bevorzugte Ausführungsform der Erfindung besteht darin, dass am Fuß des Schachtes eine Bodenplatte ausgebildet wird. Diese Bodenplatte kann insbesondere eine Betonplatte sein, welche nach Ausheben des Bodens innerhalb des Schachtes auf einem gewünschten Tiefenniveau erstellt wird.

Zur Verbesserung der Wasserhaltigkeit ist es erfindungsgemäß, dass die Bodenplatte über eine flexible Dichteinrichtung entlang ihres Umfangsrandes mit der Schachtwand verbunden ist. Die Dichteinrichtung kann dabei metallische und/oder Elastomer-Dichtelemente aufweisen. Alternativ kann die Bodenplatte durch Bewehrung oder Dübel mit der Schachtwand kraftschlüssig verbunden sein.

Das erfindungsgemäße Verfahren ist dadurch gekennzeichnet, dass zumindest einer der Wasserspeicher als ein vertikaler zylindrischer Schacht ausgebildet wird, dessen Schachtwand aus vertikalen, ringförmig nebeneinander angeordneten Wandelementen aufgebaut wird, zwischen denen Dichtungselemente angeordnet werden. Mit diesem Verfahren kann ein Wasserspeicher für das zuvor beschriebene Pumpspeicherkraftwerk und die beschriebenen Vorteile erreicht werden. Die Wasserspeicher weisen jeweils einen Zulauf und einen Ablauf auf, wobei zumindest der Ablauf im Fußbereich des Schachtes angeordnet ist und hierdurch Wasser über eine Rohrleitung zur Pump- und Kraftwerkseinheit geleitet werden kann.

Eine besonders bevorzugte Verfahrensvariante besteht erfindungsgemäß darin, dass zum Erstellen der Schachtwand in einem Boden zunächst die vertikalen Wandelemente hergestellt werden und anschließend der Boden innerhalb des Schachtes entfernt wird. Die Wandelemente können dabei insbesondere als Schlitzwandlamellen mittels Schlitzwandfräsern oder Schlitzwandgreifern hergestellt werden. Nach dem Aushärten der Schachtwand kann der Boden innerhalb des zylindrischen Schachtes bis zu der gewünschten Tiefe ausgehoben werden.

Weiterhin ist es erfindungsgemäß bevorzugt, dass am Fuß des vertikalen zylindrischen Schachtes eine Bodenplatte ausgebildet wird, welche entlang ihres Umfangsrands mit der Schachtwand über eine flexible Dichteinrichtung verbunden wird, welche radiale und/oder vertikale Lageänderungen gegenüber der Schachtwand dichtend ausgleicht. Dabei kann die Bodenplatte auch über Rückverankerungsmaßnahmen, beispielsweise Injektionsanker, Pfähle oder Schlitzwandelemente in darunterliegenden Bodenschichten verankert sein, um Auftriebskräfte bei vorhandenem Grundwasser aufzunehmen.

Weiterhin ist es nach der Erfindung in bevorzugter Weise vorgesehen, dass am Fuß des vertikalen zylindrischen Schachtes eine Bodenplatte ausgebildet wird, welche mit der Schachtwand durch Bewehrung oder Dübel kraft- und/oder formschlüssig verbunden wird. Hierdurch kann ebenfalls eine zuverlässige und hinreichend dichte Verbindung zwischen der umgehenden Schachtwand und der Bodenplatte erreicht werden.

Bei einem Pumpspeicherkraftwerk können ein einzelner Wasserspeicher oder alle Wasserspeicher als zylindrischer Schacht im Boden ausgebildet werden. Zwischen den beiden Wasserspeichern wird eine entsprechende Rohrleitung vorgesehen, an welcher in bekannter Weise die Pump- und Kraftwerkseinheit angeordnet ist. Diese Einheit umfasst eine Pumpvorrichtung, mit welcher bei einem Stromüberschuss Wasser aus dem unteren Wasserspeicher in den oberen Wasserspeicher gepumpt wird. Auf diese Weise kann der überschüssige Strom als Lageenergie gespeichert werden. Bei Bedarf kann dann über dieselbe Wasserleitung oder über eine separate Wasserleitung Wasser aus dem oberen Wasserspeicher durch eine grundsätzlich bekannte Turbinenvorrichtung wieder in den unteren Wasserspeicher abgeleitet werden. Mit einer solchen Fallrohranordnung kann die Lageenergie des Wassers im oberen Wasserspeicher beim Leiten in den unteren Wasserspeicher mit gutem Wirkungsgrad in Strom umgesetzt werden. Eine solche Pump- und Kraftwerkseinheit ist grundsätzlich bekannt und bedarf keiner weiteren Beschreibung.

Die Erfindung wird nachfolgend anhand von bevorzugten Ausführungsbeispielen weiter beschrieben, welche schematisiert in den beiliegenden Zeichnungen dargestellt sind. In den Zeichnungen zeigen:
- Fig. 1: eine stark schematisierte Querschnittsansicht durch ein erfindungsgemäßes Pumpspeicherkraftwerk;
- Fig. 2: eine Querschnittsansicht von oben auf einen nach der Erfindung ausgebildeten Wasserspeicher;
- Fig. 3: eine Querschnittsansicht von der Seite des Wasserspeichers von Fig. 2;
- Fig. 4: eine Querschnittsansicht von oben auf einen weiteren Wasserspeicher;
- Fig. 5: eine Querschnittsansicht von der Seite auf den Wasserspeicher von Fig. 4; und
- Fig. 6: eine vergrößerte Detailquerschnittsansicht eines Verbindungsbereiches zwischen Schachtwand und Bodenplatte.

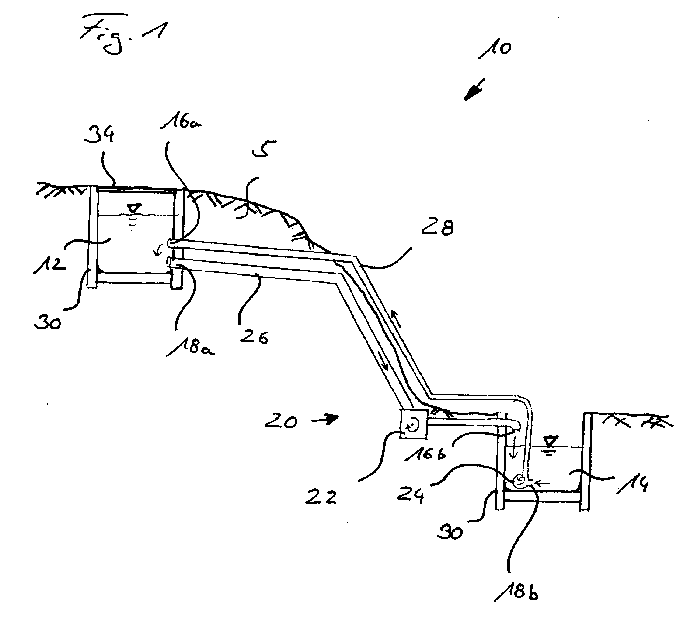

Ein erfindungsgemäßes Pumpspeicherkraftwerk 10 gemäß Fig. 1 weist einen unteren Wasserspeicher 14 und eine oberen Wasserspeicher 12 auf, welcher oberhalb des unteren Wasserspeichers 14 angeordnet ist. Wasser innerhalb des oberen Wasserspeichers 12 hat somit eine höhere potenzielle Energie gegenüber Wasser in dem unteren Wasserspeicher 14.

Die beiden Wasserspeicher 12, 14 sind über eine Pump- und Kraftwerkseinheit 20 mit Rohrleitungen verbunden. Über einen Auslass 18a am Fuß des oberen Wasserspeichers 12 wird Wasser über ein Fallrohr 26 zu einem Einlass 16b an dem unteren Wasserspeicher 14 geleitet. Im Bereich des Auslasses 16b ist eine Turbine 22 der Pump- und Kraftwerkseinheit 20 angeordnet. Das nach unten strömende Wasser treibt die Turbine 22 an, welche über einen Generator in bekannter Weise Strom erzeugt. Hierdurch wird Lageenergie des Wassers im oberen Wasserspeicher 12 in Stromenergie umgesetzt.

Bei einem Stromüberangebot kann mittels einer elektrischen Pumpe 24 der Pump- und Kraftwerkseinheit 20 Wasser von einem Einlass 18b des unteren Wasserspeichers 14 durch eine Förderleitung 28 und einen Einlass 16a in den oberen Wasserspeicher 12 gefördert werden. Auf diese Weise kann überschüssiger Strom in Lageenergie umgewandelt werden, welche dann wiederum bei Bedarf durch die Turbine 22 in elektrische Energie rückwandelbar ist.

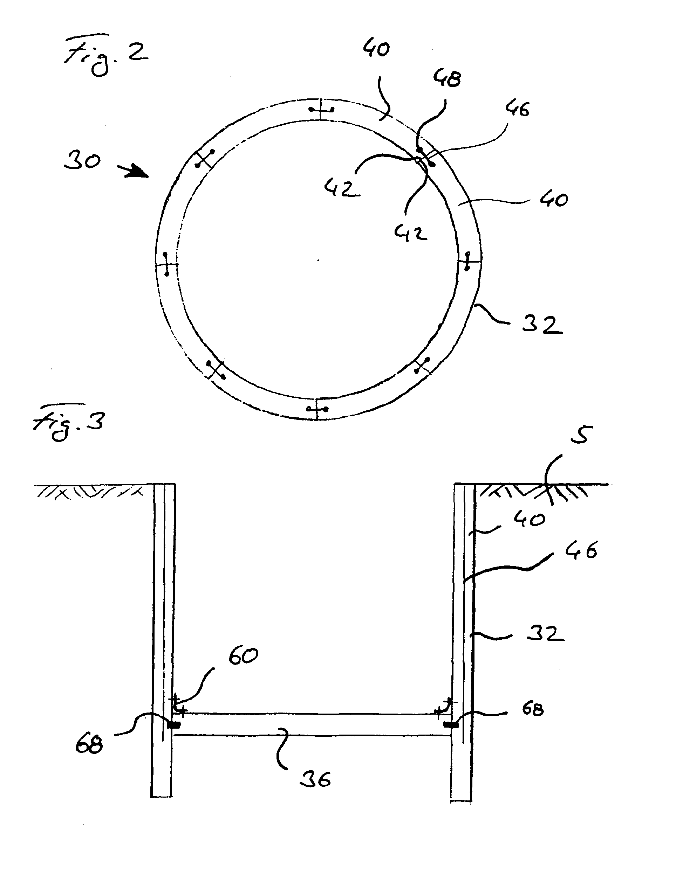

Bei dem erfindungsgemäßen Pumpspeicherkraftwerk 10 gemäß Fig. 1 sind beide Wasserspeicher 12, 14 als ein Schacht 30 ausgebildet, welcher nachfolgend näher im Zusammenhang mit den Figuren 2 und 3 erläutert wird. Der obere Wasserspeicher 12 ist mit einem Deckel 34 geschlossen.

Der Schacht 30 ist mit einer kreiszylindrischen Schachtwand 32 im Boden 5 ausgebildet. Die Schachtwand 32 ist aus vertikalen Wandelementen 40 aufgebaut, welche im Querschnitt gemäß Fig. 2 kreisbogenförmige Ringsegmente darstellen. Die vertikalen Wandelemente 40 erstrecken sich bei dem dargestellten Ausführungsbeispiel über die gesamte Tiefe des Schachtes 30. Aufgrund der daubenartigen Gestaltung der Wandelemente 40 und der im Wesentlichen Kreisringform können die Wandelemente 40 und damit die Schachtwand 32 insgesamt einem umgebenden Erddruck sehr gut widerstehen. Hierzu weisen die Wandelemente 40 an ihren aneinander grenzenden Seitenbereichen 42 Kontaktflächen auf, über welche Druckkräfte in Umfangsrichtung übertragen und somit gegenseitig kompensiert werden können. Im Bereich der Grenzflächen oder Fugen sind bandartige Dichtungselemente 46 über die Länge der vertikalen Wandelemente 40 angeordnet. Zur Verankerung der Dichtungselemente 46 als Fugenbänder können diese entlang ihrer Seitenkanten klammerartige metallische Abschlusselemente 48 wie beispielsweise Halfen-Schienen aufweisen, welche fest in den Wandelementen 40 aus Beton eingebunden sind und beispielsweise am Bewehrungskorb befestigt sind.

An dem oberen Ende des Schachtes 30 kann ein Abschlussring vorgesehen sein, welcher beispielsweise zur Aufnahme eines in Fig. 1 dargestellten Deckels 34 zum Abschließen des Schachtes 30 dient.

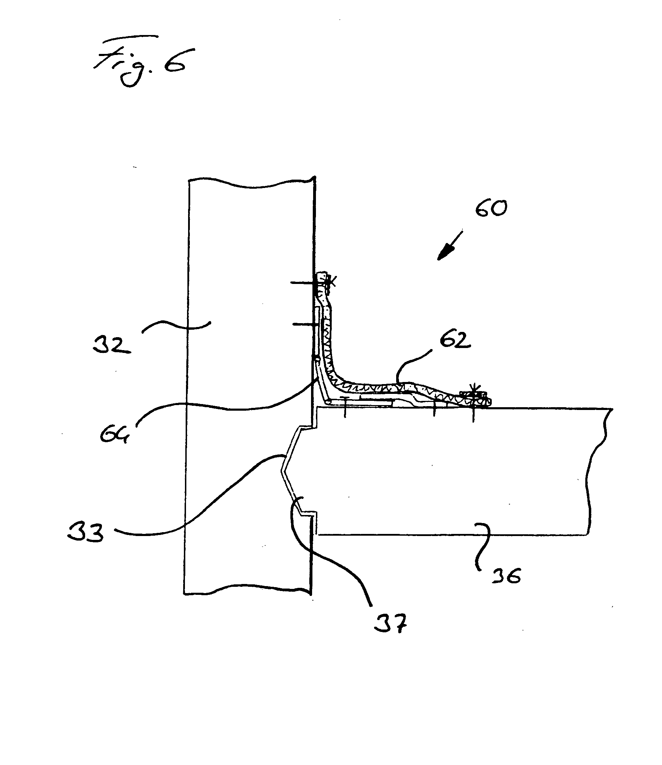

Gemäß dem dargestellten Ausführungsbeispiel nach Fig. 3 kann weiterhin eine Bodenplatte 36 am Fuß der Schachtwand 32 angeordnet sein. Entlang des Umfanges der kreisscheibenförmigen Bodenplatte 36 kann diese über Dübel 68 kraft- und formschlüssig mit der Schachtwand 32 verbunden werden. Weiterhin kann der Fugenbereich zwischen der Bodenplatte 36 und der umgebenden Schachtwand 32 mittels einer ringförmigen Dichteinrichtung 60 abgedichtet werden, welche nachfolgend noch näher im Zusammenhang mit Fig. 6 erläutert wird.

Die Wandelemente 40 sind vorzugsweise aus Beton mit einem Bewehrungskorb.

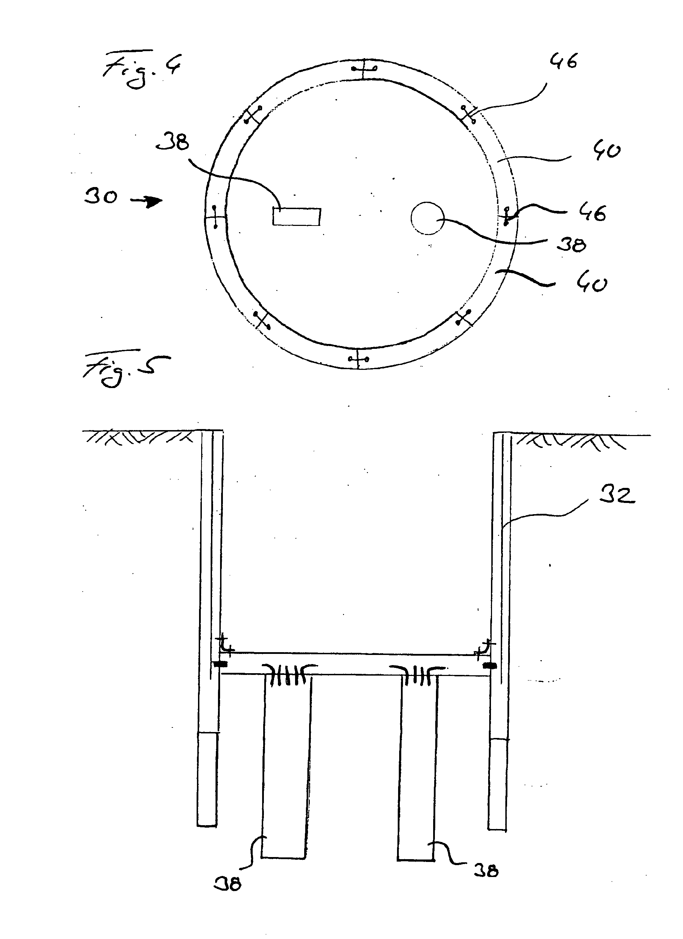

Abhängig von den Bodengegebenheiten kann die Schachtwand 32 unter das Niveau der Bodenplatte 36 weitergeführt sein. Weiter kann, wie in den Figuren 4 und 5 dargestellt, die Bodenplatte 36 über zusätzliche Bodenverankerungselemente 38 mit rechteckigem oder rundem Querschnitt in tieferen Bodenschichten verankert sein.

Gemäß der Ausführungsvariante nach Fig. 6 kann eine Bodenplatte 36 mit einem seitlich umlaufenden Vorsprung 37 ausgebildet sein, welche zur formschlüssigen Verbindung mit der umgebenden Schachtwand 32 in eine entsprechende Ausnehmung 33 eingreift. Zur Vermeidung einer Leckage durch die Verbindungsfuge ist entlang des Fugenbereiches zwischen der Bodenplatte 36 und der Schachtwand 32 eine ringförmige Dichteinrichtung 60 angeordnet. Diese umfasst ein elastisches Dichtband 62, welches insbesondere aus Gummi oder einem Elastomer gebildet ist. Um eine Beschädigung dieses elastischen Dichtbandes 62 während der im Betrieb auftretenden Lageverschiebungen durch Befüllen und Entleeren zu verhindern, ist zum Fugenbereich hin eine metallische Stützstruktur vorgesehen. Diese Stützstruktur überdeckt die Verbindungsfuge und verhindert so ein Einklemmen und damit ein Beschädigen des elastischen Dichtbandes 62 während möglicher Lageänderungen der Schachtwand 32 oder der Bodenplatte 36 im Betrieb des Wasserspeichers.

## Patentansprüche

1. Pumpspeicherkraftwerk mit
- zumindest einem oberen Wasserspeicher (12) und
- zumindest einem unteren Wasserspeicher (14) und
- mindestens einer dazwischen angeordneten Pump- und Kraftwerkseinheit (20), wobei zumindest einer der Wasserspeicher (12, 14) im Boden als ein vertikaler zylindrischer Schacht (30) mit einer Schachtwand (32) ausgebildet ist,
**dadurch gekennzeichnet,**
- **dass** die Schachtwand (32) des zylindrischen Schachtes (30) aus vertikalen, nebeneinander angrenzenden Wandelementen (40) aufgebaut ist, wobei die vertikalen Wandelemente (40) Kreisringsegmente bilden und als Schlitzwandlamellen ausgebildet sind, welche im Boden durch Aushärten einer abbindenden Masse hergestellt sind, und
- **dass** zwischen den nebeneinander angrenzenden Wandelementen (40) Dichtungselemente (46) angeordnet sind.

2. Pumpspeicherkraftwerk nach Anspruch 1,
**dadurch gekennzeichnet,**
**dass** die vertikalen Wandelemente (40) einen rechteckigen, trapezförmigen oder bogenförmigen Querschnitt aufweisen und zumindest in ihrem radial innenliegenden Seitenbereich (42) aneinander liegen.

3. Pumpspeicherkraftwerk nach Anspruch 1 oder 2,
**dadurch gekennzeichnet,**
**dass** die vertikalen Wandelemente (40) aus Beton gebildet sind.

4. Pumpspeicherkraftwerk nach einem der Ansprüche 1 bis 3,
**dadurch gekennzeichnet,**
**dass** die vertikalen Wandelemente (40) als Schlitzwandlamellen ausgebildet sind, welche mittels Schlitzwandfräsen oder Schlitzwandgreifern hergestellt sind.

5. Pumpspeicherkraftwerk nach einem der Ansprüche 1 bis 4,
**dadurch gekennzeichnet,**
**dass** die Dichtungselemente (46) als vertikale elastische Dichtungsbänder ausgeführt sind, welche zu beiden Seiten mit den angrenzenden vertikalen Wandelementen (40) fest verbunden sind.

6. Pumpspeicherkraftwerk nach einem der Ansprüche 1 bis 5,
**dadurch gekennzeichnet,**
**dass** die Dichtungselemente (46) als vertikale elastische Fugenbänder mit seitlichen metallischen Abschlusselementen (48) ausgebildet sind, welche mit den vertikalen Wandelementen (40) verbunden sind.

7. Pumpspeicherkraftwerk nach einem der Ansprüche 1 bis 6,
**dadurch gekennzeichnet,**
**dass** eine Lage der vertikalen Wandelemente (40) zwischen einer radial innen liegenden Position und einer radial außen liegenden Position veränderbar ist.

8. Pumpspeicherkraftwerk nach einem der Ansprüche 1 bis 7,
**dadurch gekennzeichnet,**
**dass** am Fuß des Schachtes (30) eine Bodenplatte (36) ausgebildet ist.

9. Pumpspeicherkraftwerk nach Anspruch 8,
**dadurch gekennzeichnet,**
**dass** die Bodenplatte (36) über eine flexible Dichteinrichtung (60) entlang ihres Umfangsrandes mit der Schachtwand (32) verbunden ist.

10. Verfahren zum Herstellen eines Pumpspeicherkraftwerkes (10) nach einem der Ansprüche 1 bis 9, wobei
- zumindest einer der Wasserspeicher (12, 14) im Boden als ein vertikaler zylindrischer Schacht (30) mit einer Schachtwand (32) ausgebildet wird, **dadurch gekennzeichnet, dass** die Schachtwand (32) des Schachtes (30) aus vertikalen, nebeneinander angeordneten Wandelementen (40) aufgebaut wird, wobei die vertikalen Wandelemente (40) Kreisringsegmente bilden und als Schlitzwandelemente ausgebildet werden, welche im Boden durch Einbringen und Aushärten einer abbindenden Masse hergestellt werden, und
- dass zwischen den nebeneinander angeordneten Wandelementen (40) Dichtungselemente (46) angeordnet werden, und anschließend der Boden innerhalb der Schachtwand (32) entfernt wird.

11. Verfahren nach Anspruch 9 oder 10,
**dadurch gekennzeichnet,**
**dass** am Fuß des vertikalen zylindrischen Schachtes (30) eine Bodenplatte (36) ausgebildet wird, welche entlang ihres Umfangsrandes mit der Schachtwand (32) über eine flexible Dichteinrichtung (60) verbunden wird, welche radiale und/oder vertikale Lageänderungen gegenüber der Schachtwand (32) dichtend ausgleicht.

12. Verfahren nach Anspruch 10 oder 11,
**dadurch gekennzeichnet,**
**dass** am Fuß des vertikalen zylindrischen Schachtes (30) eine Bodenplatte (36) ausgebildet wird, welche mit der Schachtwand (32) durch Bewehrung oder Dübel (68) kraft- und/oder formschlüssig verbunden wird.

## Claims

1. Pumped storage power station having
- at least one upper water storage tank (12) and
- at least one lower water storage tank (14) and
- at least one pump and power station unit (20) arranged in-between,
wherein at least one of the water storage tanks (12, 14) is designed in the ground as a vertical cylindrical shaft (30) with a shaft wall (32),
**characterized in that**
- the shaft wall (32) of the cylindrical shaft (30) is constructed of vertical, side by side adjoining wall elements (40), wherein the vertical wall elements (40) form circular ring segments and are designed as trench wall panels, which are produced in the ground through the hardening of a setting mass, and
- **in that** between the side by side adjoining wall elements (40) sealing elements (46) are arranged.

2. Pumped storage power station according to claim 1,
**characterized in that**
the vertical wall elements (40) have a rectangular, trapezoidal or arched cross-section and abut on each other at least in their radial inner side area (42).

3. Pumped storage power station according to claim 1 or 2,
**characterized in that**
the vertical wall elements (40) are formed of concrete.

4. Pumped storage power station according to any one of claims 1 to 3,
**characterized in that**
the vertical wall elements (40) are designed as trench wall panels which are produced by means of trench wall cutters or trench wall grabs.

5. Pumped storage power station according to any one of claims 1 to 4,
**characterized in that**
the sealing elements (46) are designed as vertical elastic sealing tapes, which are firmly connected on both sides to the adjoining vertical wall elements (40).

6. Pumped storage power station according to any one of claims 1 to 5,
**characterized in that**
the sealing elements (46) are designed as vertical elastic joint tapes with lateral metallic terminal elements (48) which are connected to the vertical wall elements (40).

7. Pumped storage power station according to any one of claims 1 to 6,
**characterized in that**
a position of the vertical wall elements (40) is changeable between a radial inner position and a radial outer position.

8. Pumped storage power station according to any one of claims 1 to 7,
**characterized in that**
at the bottom of the shaft (30) a base plate (36) is designed.

9. Pumped storage power station according to claim 8,
**characterized in that**
by way of a flexible sealing means (60) the base plate (36) is connected along its circumferential edge to the shaft wall (32).

10. Method for producing a pumped storage power station (10) according to any one of claims 1 to 9,
wherein at least one of the water storage tanks (12, 14) is designed in the ground as a vertical cylindrical shaft (30) with a shaft wall (32),
**characterized in that**
- the shaft wall (32) of the shaft (30) is constructed of vertical, side by side arranged wall elements (40), wherein the vertical wall elements (40) form circular ring segments and are designed as trench wall elements, which are produced in the ground through the introduction and hardening of a setting mass, and
- **in that** between the side by side arranged wall elements (40) sealing elements (46) are arranged and subsequently the ground inside the shaft wall (32) is removed.

11. Method according to claim 9 or 10,
**characterized in that**
at the bottom of the vertical cylindrical shaft (30) a base plate (36) is designed, which is connected along its circumferential edge to the shaft wall (32) by way of a flexible sealing means (60), which in a sealing manner compensates radial and/or vertical changes of position with respect to the shaft wall (32).

12. Method according to claim 10 or 11,
**characterized in that**
at the bottom of the vertical cylindrical shaft (30) a base plate (36) is designed, which is connected in a force-locking and/or form-locking manner to the shaft wall (32) through reinforcement or plugs (68).

## Revendications

1. Centrale d'accumulation par pompage avec :
- au moins un réservoir d'eau supérieur (12) et
- au moins un réservoir d'eau inférieur (14) et,
- disposée entre l'un et l'autre, au moins une unité (20) formant une centrale électrique et de pompage,
dans laquelle au moins l'un des réservoirs d'eau (12, 14) est réalisé dans le sol sous la forme d'un puits cylindrique vertical (30) ayant une paroi de puits (32),
**caractérisée en ce que** :
- la paroi de puits (32) du puits cylindrique (30) est constituée de panneaux de paroi verticaux (40) placés côte à côte, les panneaux de paroi verticaux (40) constituant des segments d'anneau circulaire et étant formés de plaques de paroi moulée, qui sont réalisées dans le sol par durcissement d'une masse en train de se solidifier, et
- des éléments (46) formant des joints sont disposés entre les panneaux de paroi (40) placés côte à côte.

2. Centrale d'accumulation par pompage selon la revendication 1,
**caractérisée en ce que** :
les panneaux de paroi verticaux (40) présentent en coupe transversale une forme rectangulaire, une forme trapézoïdale ou une forme d'arc, et sont placés l'un contre l'autre au moins dans leur partie latérale (42) dirigée vers l'intérieur de manière radiale.

3. Centrale d'accumulation par pompage selon la revendication 1 ou 2,
**caractérisée en ce que** :
les panneaux de paroi verticaux (40) sont réalisés en béton.

4. Centrale d'accumulation par pompage selon une des revendications 1 à 3,
**caractérisée en ce que** :
les panneaux de paroi verticaux (40) sont formés de plaques de paroi moulée, qui sont mises en place au moyen de pelleteuses ou de trépans-bennes.

5. Centrale d'accumulation par pompage selon une des revendications 1 à 4,
**caractérisée en ce que** :
les éléments (46) formant des joints sont réalisés sous la forme de rubans formant des joints verticaux souples, qui, des deux côtés, sont fermement reliés aux panneaux de paroi verticaux (40) placés côte à côte.

6. Centrale d'accumulation par pompage selon une des revendications 1 à 5,
**caractérisée en ce que** :
les éléments (46) formant des joints sont réalisés sous la forme de rubans formant des joints verticaux souples avec des éléments de fermeture métalliques latéraux (48), qui sont reliés aux panneaux de paroi verticaux (40).

7. Centrale d'accumulation par pompage selon une des revendications 1 à 6,
**caractérisée en ce que** :
la position des panneaux de paroi verticaux (40) peut être modifiée entre une position dirigée vers l'intérieur de manière radiale et une position dirigée vers l'extérieur de manière radiale.

8. Centrale d'accumulation par pompage selon une des revendications 1 à 7,
**caractérisée en ce que** :
une plaque de sol (36) est prévue au fond du puits (30).

9. Centrale d'accumulation par pompage selon la revendication 8,
**caractérisée en ce que** :
la plaque de sol (36) est fixée à la paroi du puits (32) tout le long de sa circonférence par l'intermédiaire d'un élément étanche flexible (60).

10. Procédé de formation d'une centrale d'accumulation par pompage (10) selon une des revendications 1 à 9 dans laquelle au moins l'un des réservoirs d'eau (12, 14) est réalisé dans le sol sous la forme d'un puits cylindrique vertical (30) ayant une paroi de puits (32),
**caractérisé en ce que** :
- la paroi de puits (32) du puits (30) est constituée de panneaux de paroi verticaux (40) placés côte à côte, les panneaux de paroi verticaux (40) constituant des segments d'anneau circulaire et étant formés de plaques de paroi moulée, qui sont réalisées dans le sol par apport et durcissement d'une masse en train de se solidifier, et
- des éléments (46) formant des joints sont placés entre les panneaux de paroi (40) placés côte à côte, et, ensuite, le matériau du sol est, à l'intérieur de la paroi du puits (32), enlevé.

11. Procédé selon la revendication 9 ou 10,
**caractérisé en ce que** :
il est prévu au fond du puits cylindrique vertical (30) une plaque de sol (36), celle-ci étant fixée à la paroi de puits (32) tout le long de sa circonférence par l'intermédiaire d'un élément étanche flexible (60), qui assure une compensation dans le sens de l'épaisseur par rapport aux changements de position de la paroi du puits (32) dans une direction radiale et/ou verticale.

12. Procédé selon la revendication 10 ou 11,
**caractérisé en ce que** :
il est prévu au fond du puits cylindrique vertical (30) une plaque de sol (36), celle-ci étant fixée, par une liaison mécanique et/ou au moyen d'une liaison par une forme complémentaire, à la paroi de puits (32) au moyen d'éléments de renfort ou de chevilles (68).
